# EUROPÄISCHE PATENTSCHRIFT

(11) **EP 0 350 777 B1**
(45) Veröffentlichungstag und Bekanntmachung des Hinweises auf die Patenterteilung: **23.06.1993**
(21) Anmeldenummer: 89112278.0
(22) Anmeldetag: 05.07.1989
(51) Int. Cl.: A23C 19/00, A23C 19/02, A23C 19/024, A23C 19/06

(54) **Verfahren und Vorrichtung zur Käseherstellung**
Process and device for the production of cheese
Procédé et appareil pour la production de fromage

(30) Priorität: 15.07.1988 CH 2716/88
(43) Veröffentlichungstag der Anmeldung: 17.01.1990
(73) Patentinhaber: KALT SÖHNE AG, CH-9235 Lütisburg (CH)
(72) Erfinder: Kalt, Franz, CH-9235 Lütisburg (CH)
(74) Vertreter: Klunker . Schmitt-Nilson . Hirsch

(56) Entgegenhaltungen:
- DE-A- 2 437 894
- GB-A- 1 423 957
- GB-A- 1 423 958
- GB-A- 2 074 435

## Beschreibung

Die Erfindung betrifft ein Verfahren zur Käseherstellung, bei dem zerstückelte Gallerte aus einem zur Eindickung von Milch dienenden Kessel mit Hilfe einer Fördereinrichtung in eine Einschwemmpresse übergeführt, nach Abzug der Molke aus der Gallerte der übriggebliebene, in Formen abgefüllte Käsebruch wiederholt und individuell der Presskraft jeweils des zugeordneten Kolbens eines der Einschwemmpresse zugehörigen Presskopfes ausgesetzt wird, wobei jedoch die Formen jeweils zwischen zwei Pressvorgängen zu wenden sind.

Nach einer bekannten Herstellungsmethode erfolgt das Einfüllen des Käsebruchs nach dessen Zerschneiden in angemessene Portionen von Hand in eine Anzahl einzelner, in die Wanne der Einschwemmpresse ohne Bodenplatte eingesetzter Formen. Das jeweils nach einem Pressvorgang erforderliche Wenden der Formen muss wiederum manuell durchgeführt werden, wobei die Käsemasse ebenfalls von Hand an einem Herausfallen aus der Form verhindert wird. Zum Wenden der zusammen mit ihrem Inhalt sehr gewichtigen Formen müssen diese zunächst gehoben und nach erfolgtem Umlippen derselben um 180° wieder in die Wanne abgesetzt werden. Diese manuelle Arbeitsweise bedingt eine mit einem erheblichen Zeitaufwand verbundene, schwere, körperliche Anstrengung.

Aufgabe der Erfindung ist es daher, ein Verfahren anzugeben, daß die Käseherstellung ohne die zeitraubende, körperliche Schwerarbeit ermöglicht.

Die Aufgabe wird mit Hilfe der Massnahmen gemäss dem kennzeichnenden Teil des Patentanspruches 1 gelöst.

Dank dem erfindungsgemässen Verfahren kann im Käsereibetrieb die anstrengende manuelle Arbeit erspart und zugleich ein beträchtlicher Zeitgewinn erzielt werden. Da einerseits eine zunehmende Anzahl innerhalb eines bestimmten Zeitabschnittes durchgeführter Wendevorgänge der Käsequalität in hohem Masse förderlich ist und andererseits mit den Massnahmen gemäss der Erfindung ein mechanisierter, schnellerer Wendevorgang ermöglicht wird, lässt sich mit dem gleichen Aufwand eine bessere Käsequalität erreichen. Gleichzeitig kann auch die Möglichkeit für eine flexible Umstellung der Produktion auf andere Käsesorten unterschiedlicher Qualität und Form bei einem vernünftigen Kostenaufwand erreicht werden.

Massnahmen zu vorteilhaften Ausgestaltungen des Verfahrens ergeben sich aus den abhängigen Patenansprüchen 2 bis 5.

Die Erfindung hat ferner eine Vorrichtung zur Käseherstellung zum Gegenstand, wie sie in Anspruch 6 angegeben ist. Diese Vorrichtung eignet sich insbesondere auch zur Durchführung des beschriebenen Verfahrens.

Die Erfindung hat schließlich eine Anordnung von Formen zur Aufnahme von Käsemasse beim Abpressen von Flüssigkeit zum Gegenstand, wie sie in Anspruch 20 angegeben ist.

Es sind bereits in den USA vollautomatisch arbeitende Anlagen für die Massenherstellung jeweils speziell einer einzigen Käsesorte mit einer bestimmten Form bekannt geworden. Sie sind für mittlere und untere Produktionskapazitäten jedoch zu kostspielig und zum Zwecke einer Umstellung der Produktion auf andere Käsesorten nicht umrüstbar.

Nach den heutigen Marktbedürfnissen ist die Nachfrage oft kurzfristigen Schwankungen unterworfen, die jeweils eine Umrüstung der Einschwemmpresse auf andere Formen erforderlich machen. Diesem Bedürfnis kommt die erfindungsgemässe Vorrichtung entgegen, indem eine Unrüstung derselben sehr einfach und kurzfristig ohne zusätzliche Investitionen möglich ist.

Merkmale besonders zweckmässiger weiterer Ausbildungen der Vorrichtung sind Gegenstand der abhängigen Patentansprüche 7 bis 19.

Die Erfindung wird beispielsweise anhand bevorzugter Ausführungsformen gemäss der Zeichnung näher erläutert.

Es zeigen:
- Figur 1: den Aufriss einer gemäss der Erfinung ausgebildeten Einschwemmpresse,
- Figur 2: einen Querschnitt durch die Einschwemmpresse nach der Figur 1 in der dort angedeuteten Schnittebene A-A,
- Figur 3: eine erste Ausführungsform eines Wendemechanismus zum satzweisen Wenden der Formen der Einschwemmpresse und
- Figur 4: eine Kippvorrichtung für Formensätze als zusätzlicher Bestandteil des Wendemechanismus gemäss der Figur 3.

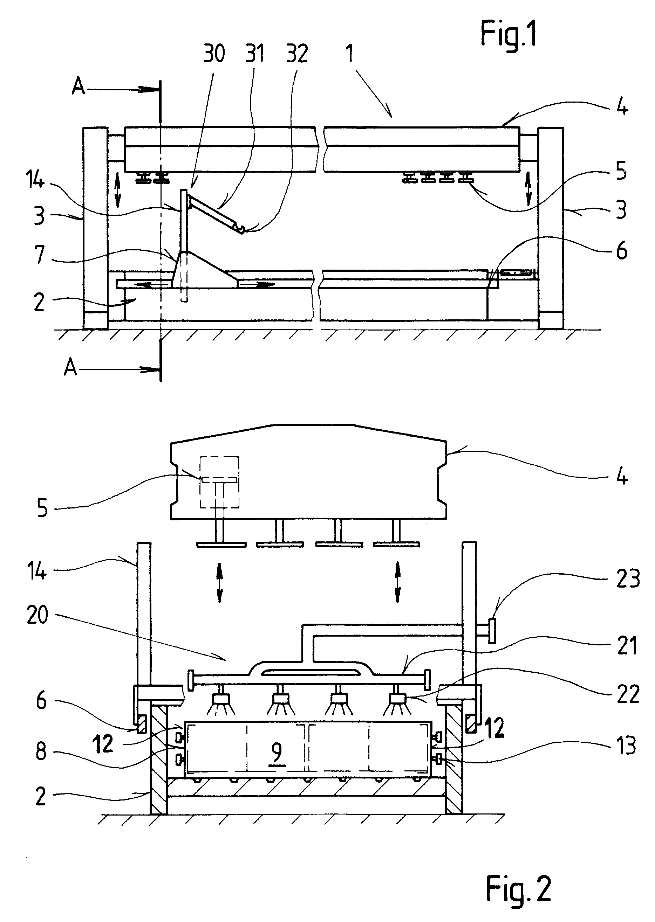

Die in der Figur 1 veranschaulichte Einschwemmpresse 1 besteht aus den an und für sich bekannten Hauptbestandteilen, nämlich einer Wanne 2, die zugleich auch ein Gestell mit zwei Endsäulen 3 bildet und zur Aufnahme von Formen dient, einem darüber senk- und hebbar angeordneten Presskopf 4, der eine Anzahl druckbetätigbarer Kolben 5 trägt. An zwei je an einer der beiden Längsseiten der Wanne 2 angebrachten Schienen 6 ist ein portalartig ausgebildeter Wagen 7 geführt (vgl. auch Fig. 2). Ein in Figur 1 nicht gezeigter Antrieb zum Verfahren des Portalwagens 7 ist unterhalb der Wanne 2 gelagert.

Wie ferner der Figur 2 entnehmbar,sind Formensätze 8, gebildet jeweils als eine starr zusammenhängende und als eine Einheit manipulierbare Reihe aus vier Einzelformen 9, in der Wanne 2 aufgenommen. Die Einzelformen 9 sind auswechselbar und können entweder sämtlich mit kreisrundem oder aber vieleckigem Querschnitt gleichgeformt sein oder auch unterschiedliche Gestalt aufweisen. Es ist somit eine Umrüstung auf Formensätze 8 mit andersartigen Einzelformen 9 zwecks Umstellung der Produktion auf eine andere Käsesorte verschiedener Qualität und/oder Form ohne grossen Aufwand möglich. Die Wandung der Einzelformen 9 besteht aus einem gelochten Blech und jede der Einzelformen 9 ist auch mit je einer Abdeckplatte 10 und einer Bodenplatte 11 aus dem gleichen Werkstoff ausgerüstet, die mit Hilfe in der Pressrichtung elastisch zurückweichender, in der Zeichnung nicht gezeigter Verbindungselemente an der Formenwandung festgehalten werden. Die Formensätze 8 sind an ihren Endflächen 12 je mit zwei kreiszylindrischen Ansätzen 13 zu einem weiter unten noch zu erläuternden Zweck versehen. Die Formensätze 8 erstrecken sich jeweils nahezu über die Gesamtbreite der Einschwemmpresse 1 bzw. der Wanne 2.

Es ist weiterhin in der Figur 2 eine Verteilvorrichtung 20 dargestellt. Diese muss zum satzweisen Abfüllen der zufliessenden Gallerte in die Einzelformen 9 in der Längsrichtung der Einschwemmpresse 1 verschiebbar sein und steht daher mit dem Portalwagen 7 in Betätigungsverbindung. Die Verteilvorrichtung 20 weist ein waagerecht angeordnetes Verteilrohr 21 mit daran vorgesehenen Dosierapparaten 22 für die Gallerte sowie ein bewegbares Zuführrohr 23 auf. Das letztere schliesst an das Verteilrohr 21 an und steht über einen elastischen, nicht gezeigten Schlauch mit einer ebenfalls nicht abgebildeten Förderpumpe in Strömungsverbindung. Das Verteilrohr 21 ist derart beidseits am Portalwagen 7 aufgehängt, dass sich die Ausgänge der daran zugeordneten Dosierapparate 22 etwa auf der Höhe der Oberkante der Wanne 2 befinden. Dabei sind die Ausgänge senkrecht nach unten ausgerichtet, und die Anzahl der Dosierapparte 22 entspricht derjenigen der Einzelformen 9 je Formensatz 8. Das Verteilrohr 21 und das Zuführrohr 23 stehen derart miteinander in Verbindung, dass sie in bezug aufeinander horizontal, d.h. um eine Vertikalachse, verschwenkbar sind.

Eine erste Ausführungsform eines Wendemechanismus 30 für die Formensätze 8 ist ebenfalls an dem die Verteilvorrichtung 20 tragenden Portalwagen 7 angeordnet. Sie besteht im wesentlichen aus zwei Greifarmen 31 je mit einem Haken 32 an deren freiem Ende. Die Greifarme 31 sind jeweils einem der beiden Schenkel 14 des Portalwagens 7 so angelenkt, dass sie zum Erfassen jeweils eines der Ansätze 13 an den Endflächen 12 der Formensätze 8 und zum Aufheben bzw. Absenken der letzteren mittels ihrer ebenfalls an den Portalschenkeln 14 angeordneten, in der Zeichnung nicht sichtbaren Betätigungszylinder aus ihrer senkrechten Ruhelage ausschwenkbar und in diese zurückschwenkbar sind.

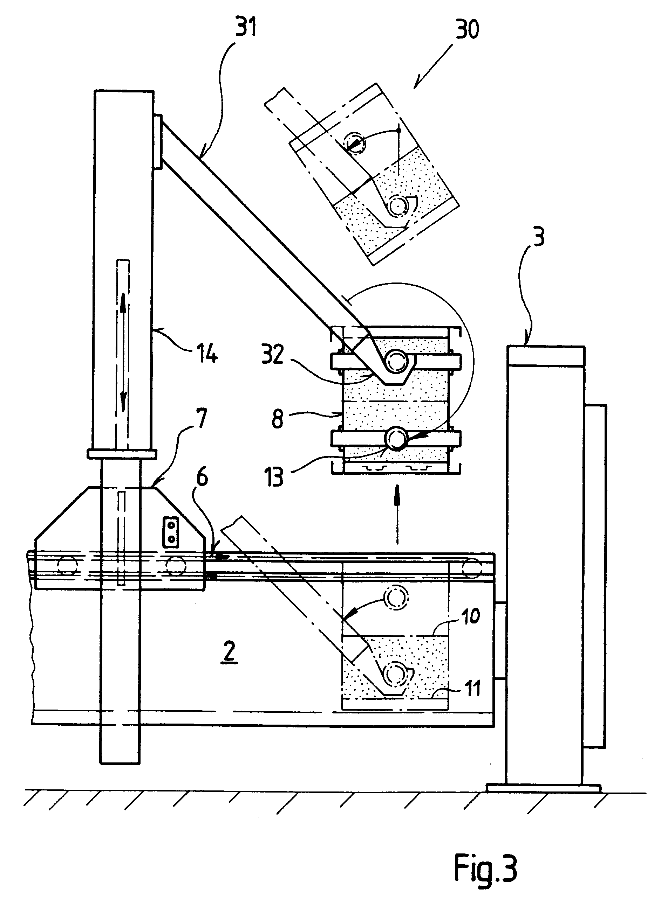

Mit Hilfe der geschilderten Ausführungsform ist also das körperlich anstrengende Heben und Senken der schweren Formensätze 8 samt deren Inhalt vermeidbar. Das eigentliche Wenden der Formensätze 8 wird hierbei durch manuelles Umkippen derselben um 180° in deren Hochlage nach erfolgten Aufheben derselben anhand der Greifarme 31 vollzogen, wobei der jeweilige Formensatz 8 zur Stabilisierung seiner Lage während des Hubes zunächst manuell anhand ihrer von den Haken 32 der Greifarme 31 nicht erfassten beiden Ansätze 13 gegen den betreffenden Greifarm 31 abgestützt wird (vgl. Fig. 3). Somit kann die erste Ausführungsform des Wendemechanismus 30 als eine halbmechanisierte Lösung für den Wendevorgang angesehen werden.

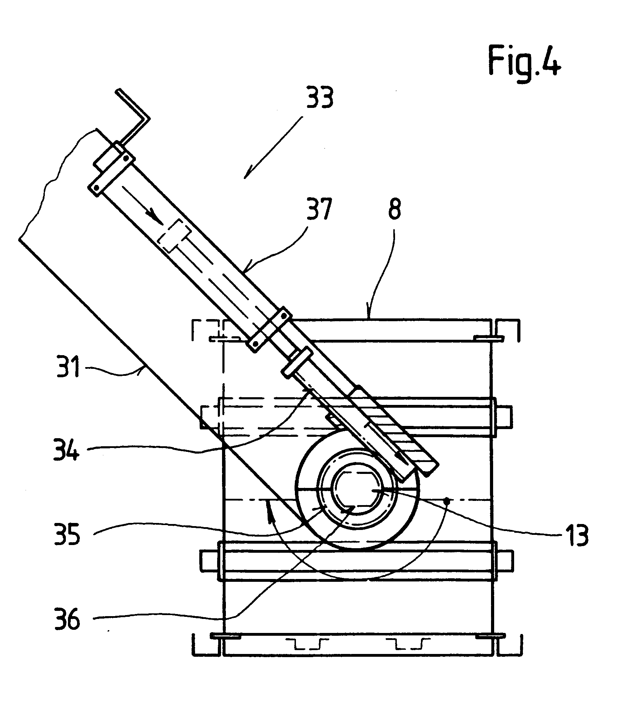

Zur Verwirklichung des Wendevorganges mit vollmechanisiertem Funktionsablauf wird der Wendemechanismus 30 mit einer Kippvorrichtung 33 gemäss der Figur 4 zu einer zweiten Ausführungsform erweitert. Die Kippvorrichtung 33 setzt sich aus einer Zahnstange 34, einem damit kämmendem Zahnrad 35 mit Hohlnabe 36 und einem zugeordneten Betätigungszylinder 37 zusammen und soll anstelle eines Hakens 32 am Endabschnitt des jeweiligen Greifarmes 31 angebracht sein. In diesem Zusammenhang sollen dann die Endflächen 12 der Formensätze 8 lediglich mit einem einzigen, zentral angeordnetem Ansatz 13 ausgerüstet sein, dessen Umriss formschlüssig passend zu dem Innenumriss der Hohlnabe 36 des Zahnrades 35 ausgestaltet ist, wobei der Umriss des Ansatzes 13 im Querschnitt zwei Abflachungen im Vergleich zu einem runden Querschnitt hat. Auf diese Weise wird auch das Umkippen der Formensätze 8 in deren Hochlage ohne Zutun irgendwelcher Bedienungspersonen durchführbar. Die Greifarme 31 sind in Axialrichtung der Ansätze 13 verschiebbar, um die Hohlnaben 36 in Eingriff und außer Eingriff mit den Ansätzen zu bringen.

Es ist auch möglich, für die beiden Ausführungsformen des Wendemechanismus 30 einen besonderen Förderwagen vorzusehen.

Der Funktionsablauf der beiden besagten Ausführungsformen ist selbstverständlich auch vollautomatisch vollziehbar.

Schliesslich wird es für gewisse Anwendungen empfehlenswert sein, die Lagerung der Einschwemmpresse 1 an ihren beiden Endsäulen 3 so vorzusehen, dass die Wanne 2 mit den Formensätzen 8 und der darüber angeordnete Presskopf 4 nach jedem Pressvorgang noch in zusammengefahrenen Zustand mittels eines Antriebs um eine gemeinsame Achse drehbeweglich sind. Es kann dadurch sowohl eine Schwenkbewegung besagter Teile um 180° als auch eine volle Umdrehung derselben jeweils um 360°, im Aussetzbetrieb oder kontinuierlich, und damit eine erhebliche, weitere Kürzung der Produktionszyklen ermöglicht werden.

## Patentansprüche

1. Verfahren zur Käseherstellung, bei dem zerstückelte Gallerte aus einem zur Eindickung von Milch dienenden Kessel mit Hilfe einer Fördereinrichtung in eine Einschwemmpresse überführt, nach Abzug der Molke aus der Gallerte der übrig gebliebene, in Formen abgefüllte Käsebruch wiederholt und individuell der Presskraft jeweils des zugeordneten Kolbens eines der Einschwemmpresse zugehörigen Presskopfes ausgesetzt wird, wobei jedoch die Formen jeweils zwischen zwei Pressvorgängen zum wenden sind, dadurch gekennzeichnet, daß die Ueberführung der Gallerte unmittelbar in Sätze innerhalb der Einschwemmpresse vorgesehener Einzelformen erfolgt und nach Verschluss sämtlicher Einzelformen jeweils mit einer wasserdurchlässigen Abdeckung die Formensätze abwechselnd Press- und Wendevorgängen unterzogen werden, wobei mindestens das erforderliche Aufheben und Absenken der Formensätze bei jedem Wendevorgang mechanisiert vollzogen wird.

2. Verfahren nach Patentanspruch 1, dadurch gekennzeichnet, daß die Ueberführung der Gallerte gleichzeitig je Formensatz und in gleichdosierter Menge je Einfüllform durchgeführt wird.

3. Verfahren nach Patentanspruch 2, dadurch gekennzeichnet, daß das Kippen der Formensätze beim Wendevorgang von Hand erfolgt.

4. Verfahren nach Patentanspruch 2, dadurch gekennzeichnet, daß das Kippen der Formensätze beim Wendevorgang mechanisiert durchgeführt wird.

5. Verfahren nach einem der Patentansprüche 1 bis 4, dadurch gekennzeichnet, daß nach Durchführung einer erforderlichen Anzahl von Wendevorgängen die Formensätze selbsttätig entleert und deren Inhalt weiterbefördert wird.

6. Einschwemmpresse zur Käseherstellung, der eine Fördereinrichtung (21,22, 23) zum Zuführen von Gallerte in Formen (9) der Einschwemmpresse (1) zugeordnet ist und die einen Presskopf (4) zum Zusammenpressen der Gallerte in den Formen (9) aufweist, gekennzeichnet durch eine Mehrzahl von Formensätzen (8), bestehend jeweils aus einer sich in Breitenrichtung der Einschwemmpresse (1) erstreckenden, starr zusammenhängenden Reihe von Einzelformen (9); eine zum satzweisen Abfüllen der Gallerte in die Einzelformen (9) dienende, als Teil der Fördereinrichtung in Längsrichtung der Einschwemmpresse (1) verschiebbare Verteilvorrichtung (20) und einen ebenfalls die Einschwemmpresse (1) entlang verfahrbaren Wendemechanismus (30) für die Formensätze (8).

7. Einschwemmpresse nach Patentanspruch 6, dadurch gekennzeichnet, daß die Formensätze (8) aus auswechselbaren Einzelformen (9) identischer Formgebung, vorzugsweise mit kreisrunden oder vieleckigem Querschnitt, gebildet sind.

8. Einschwemmpresse nach Patentanspruch 6 oder 7, dadurch gekennzeichnet, daß Formensätze (8) mit auswechselbaren Einzelformen (9) kreiszylindrischer Gestalt und Formensätze (8) mit auswechselbaren Einzelformen (9) vieleckiger Querschnittsgestalt für die Einschwemmpresse (1) vorgesehen sind.

9. Einschwemmpresse nach einem der Patentansprüche 6 bis 8, dadurch gekennzeichnet, daß die Wandung der Einzelformen (9) aus gelochtem Blech hergestellt ist, und daß zu jeder Einzelform (9) auch eine Abdeckplatte (10) und eine Bodenplatte (11) aus dem gleichen Werkstoff gehört, wobei die Abdeckplatte (10) und die Bodenplatte (11) mittels in der Pressrichtung elastisch nachgebender Verbindungselemente mit der jeweiligen Formenwandung verbunden sind.

10. Einschwemmpresse nach einem der Patentansprüche 6 bis 9, gekennzeichnet durch je zwei vorzugsweise kreiszylindrische Ansätze (13) an den beiden Endflächen (12) der Formensätze (8).

11. Einschwemmpresse nach einem der Patentansprüche 6 bis 10, dadurch gekennzeichnet, daß die Verteilvorrichtung (20) ein waagrecht angeordnetes Verteilrohr (21), mit daran angeordneten Dosierapparaten (22) für die Gallerte, einen das Verteilrohr (21) tragenden, die Einschwemmpresse (1) entlangverfahrbaren Wagen (7) und ein bewegbares Zuführrohr (23) aufweist, das an das Verteilrohr (21) anschliesst und das über einen elastischen Schlauch mit einer Förderpumpe in Verbindung steht.

12. Einschwemmpresse nach Patentanspruch 11, dadurch gekennzeichnet, daß die Dosierapparate (22) für die Gallerte am Verteilrohr (21) mit senkrecht nach unten gerichtetem Ausgang angeordnet sind und deren Anzahl derjenigen der Einzelformen (9) je Formensatz (8) entspricht.

13. Einschwemmpresse nach Patentanspruch 11 oder 12, dadurch gekennzeichnet, daß der Wagen (7) portalartig ausgebildet, daran das Verteilrohr (21) aufgehängt und derart mit dem Zuführrohr (23) verbunden ist, dass die beiden Rohre (21,23) in bezug aufeinander horizontal verschwenkbar sind.

14. Einschwemmpresse nach einem der Patentansprüche 11 bis 13, dadurch gekennzeichnet, daß der Portalwagen (7) bei seiner kraftbetriebenen Verschiebebewegung an Schienen (6) geführt ist, die die beiden Längsseiten der Einschwemmpresse (1) entlang vorgesehen sind.

15. Einschwemmpresse nach einem der Patentansprüche 6 bis 14, dadurch gekennzeichnet, daß der Wendemechanismus (30) im wesentlichen aus zwei Greifarmen (31) je mit einem Haken (32) an deren freiem Ende besteht, die jeweils einem der beiden Schenkel (14) des Portalwagens (7) der Verteilvorrichtung (20) derart angelenkt sind, daß sie zum Erfassen jeweils einen der Ansätze (13) an den Endflächen (12) der Formensätze (8) und zum Aufheben bzw. Absenken der letzteren mittels ihrer ebenfalls an den Portalschenkeln (14) angeordneter Betätigungszylinder aus ihrer senkrechten Ruhelage ausschwenkbar und in diese zurückschwenkbar sind.

16. Einschwemmpresse nach Patentanspruch 15, dadurch gekennzeichnet, daß der Wendemechanismus (30) statt der Greifarm-Haken (32) eine Kippvorrichtung (33) mit einer Zahnstange (34), einem damit kämmenden Zahnrad (35) mit Hohlnabe (36) und einem zugeordneten Betätigungszylinder (37) aufweist.

17. Einschwemmpresse nach Patentanspruch 16, dadurch gekennzeichnet, daß die Endflächen (12) der Formensätze (8) jeweils mit nur einem, zentral angeordneten Ansatz (13) versehen sind, dessen Umriß formschlüssig passend zu dem Innenumriß der Hohlnabe (36) ausgestaltet ist.

18. Einschwemmpresse nach Patentanspruch 16 oder 17, dadurch gekennzeichnet, daß der Wendemechanismus (30) an einem besonderen Förderwagen angeordnet ist.

19. Einschwemmpresse nach einem der Patentansprüche 6 bis 14, dadurch gekennzeichnet, daß eine Wanne (2) für die Formensätze (8) und der Presskopf (4) derart an der Einschwemmpresse (1) gelagert sind, daß die Wanne (2) mit den Formensätzen (8) und der Presskopf (4) nach jedem Pressvorgang noch in zusammengefahrenem Zustand mit Hilfe eines Antriebes - unter Verzicht auf einen verfahrbaren Wendemechanismus (30) - um eine gemeinsame Achse drehbeweglich sind.

20. Anordnung von mit gelochter Wandung ausgebildeten Formen zur Aufnahme von Käsemasse beim Abpressen von Flüssigkeit,
dadurch gekennzeichnet, daß mehrere Einzelformen (9) starr zusammenhängend zu einem als Einheit manipulierbaren Formensatz (8) zusammengefügt sind.

21. Anordnung von Formen nach Anspruch 20,
dadurch gekennzeichnet, daß der Formensatz (8) eine Breite besitzt, die nahezu der Gesamtbreite einer Einschwemmpresse (1) zur Käseherstellung oder der Breite einer Wanne (2) einer Einschwemmpresse (1) zur Käseherstellung entspricht.

## Claims

1. Process for cheese production, in which comminuted gelatinous material from a vessel which serves for thickening milk is transferred with the aid of a transport means into a cheese press and, after removal of the whey from the gelatinous material, the remaining curd filled into moulds is subjected repeatedly and individually to the compressive force of the associated piston of a press head belonging to the cheese press, the moulds, however, being turned between every two compression operations, characterised in that the gelatinous material is transferred directly into sets of individual moulds provided within the cheese press and, after closure of all individual moulds with a water-permeable cover in each case, the mould sets are subjected alternately to the compression and turning operations, at least the required lifting and lowering of the mould sets being mechanised during each turning operation.

2. Process according to Claim 1, characterised in that transfer of the gelatinous material is carried out simultaneously for each mould set and in the same metered amount per mould.

3. Process according to Claim 2, characterised in that the tilting of the mould sets in the turning operation is performed manually.

4. Process according to Claim 2, characterised in that the tilting of the mould sets during the turning process is mechanised.

5. Process according to any of Claims 1 to 4, characterised in that, after a required number of turning operations have been carried out, the mould sets are automatically emptied and their content is transported further.

6. Cheese press for cheese production, which is coordinated with the transport means (21, 22, 23) for feeding the gelatinous material into moulds (9) of the cheese press (1) and which has a press head (4) for compressing the gelatinous material in the moulds (9), characterised by a plurality of mould sets (8), each consisting of a rigidly connected row of individual moulds (9) extending along the width of the cheese press (1); a distribution device (20) which serves for batchwise filling of the gelatinous material into the individual moulds (9) and can be moved as part of the transport means in the longitudinal direction of the cheese press (1), and a turning mechanism (30) for the mould sets (8), which mechanism can likewise be moved along the cheese press (1).

7. Cheese press according to Claim 6, characterised in that the mould sets (8) are formed from replaceable individual moulds (9) of identical shape, preferably having a circular or polygonal cross-section.

8. Cheese press according to Claim 6 or 7, characterised in that mould sets (8) having replaceable individual moulds (9) of cylindrical shape and mould sets (8) having replaceable individual moulds (9) of polygonal cross-section are provided for the cheese press (1).

9. Cheese press according to any of Claims 6 to 8, characterised in that the wall of the individual moulds (9) is produced from perforated sheet metal, and that a baseplate (11) of the same material belongs to each individual mould (9), the cover plate (10) and the baseplate (11) are connected to the particular mould wall by means of connecting elements which exhibit elastic yield in the pressing direction.

10. Cheese press according to any of Claims 6 to 9, characterised by two, preferably cylindrical projections (13) on each of the two end surfaces (12) of the mould sets (8).

11. Cheese press according to any of Claims 6 to 10, characterised in that the distribution device (20) has a horizontally arranged distribution pipe (21) with metering apparatuses (22) for the gelatinous material which are attached thereto, a carriage (7) which carries the distribution pipe (21) and can travel along the cheese press (1), and a movable feed pipe (23) which is connected to the distribution pipe (21) and which is connected via an elastic hose to a delivering pump.

12. Cheese press as claimed in Claim 11, characterised in that the metering apparatus (22) for the gelatinous material are arranged on the distribution pipe (21) with the outlet pointing downwards, and the number thereof corresponds to the number of the individual moulds (9) per mould set (8).

13. Cheese press according to Claim 11 or 12, characterised in that the carriage (7) has a gantry-like design and the distribution pipe (21) is suspended thereon and is connected to the feed pipe (23) in such a way that two pipes (21, 23) can be swivelled horizontally relative to one another.

14. Cheese press according to any of Claims 11 to 13, characterised in that, in its power-drive displacement, the gantry carriage (7) is guided on rails (6) which are provided along the two longitudinal sections of the cheese press (1).

15. Cheese press according to any of Claims 6 to 14, characterised in that the turning mechanism (30) essentially consists of two gripping arms (31), each having at its free end a hook (32) and each being hinged to one of the two limbs (14) of the gantry carriage (7) of the distribution device (20) in such a way that, for gripping one of the projections (13) on each of the end surfaces (12) of each of the mould sets (8) and for lifting or lowering the latter, they can be swivelled out of their vertical rest position and back into this position by means of their drive cylinders, likewise arranged on the gantry limbs (14).

16. Cheese press according to Claim 15, characterised in that, instead of the gripping arm hooks (32), the turning mechanism (30) has a tilting device (33) with a toothed rod (34), a gear wheel (35) intermeshing therewith and having a hollow hub (36) and an associated drive cylinder (37).

17. Cheese press according to Claim 16, characterised in that the end surfaces (12) of the mould sets (8) are each provided with only one, centrally arranged projection (13), the contour of which is designed to have an interlocking fit in the inner contour of the hollow hub (36).

18. Cheese press according to Claim 16 or 17, characterised in that the turning mechanism (30) is arranged on a particular transport carriage.

19. Cheese press according to any of Claims 6 to 14, characterised in that a trough (2) for the mould sets (8) and the press head (4) are mounted on the cheese press (1) in such a way that the trough (2) with the mould sets (8) and the press head (4) can be rotated about a common axis after each compression operation while still in the engaged state with the aid of a drive - without a mobile turning mechanism (30).

20. Arrangement of moulds formed with a perforated wall for holding cheese material while liquid is being pressed out, characterised in that several individual moulds (9) are rigidly connected to form a mould set (8) which can be manipulated as a unit.

21. Arrangement of moulds according to Claim 20, characterised in that the mould set (8) has a width which almost corresponds to the total width of a cheese press (1) for cheese production or to the width of the trough (2) of a cheese press (1) for cheese production.

## Revendications

1. Procédé pour la production de fromage, dans lequel de la pâte réduite en morceaux, provenant d'une citerne servant à l'épaississement du lait, est transférée, à l'aide d'un dispositif de transport, dans une presse d'égouttage, le morceau de fromage restant, après extraction du petit lait hors de la pâte, étant placé dans des moules et soumis, de façon répétée et individuelle, à la force de pression du piston chaque fois associé d'une tête de pressage appartenant à la presse à égoutter, les moules étant cependant chaque fois retournés entre deux processus de pressage, caractérisé en ce que le transfert de la pâte s'effectue directement en groupe de moules individuels prévus à l'intérieur de la presse à égoutter et qu'après fermeture de l'ensemble des moules, les groupes de moules sont soumis alternativement, à l'aide d'un couvercle perméable à l'eau, à des processus de pressage et de retournement, où au moins le soulèvement et l'abaissement nécessaires des groupes de moules est effectué de façon mécanisée à chaque processus de retournement.

2. Procédé selon la revendication 1, caractérisé en ce que le transfert de la pâte s'effectue simultanément pour chaque groupe de moules et en une quantité égale, déterminée par un dosage, pour chaque moule à remplir.

3. Procédé selon la revendication 2, caractérisé en ce que le basculement des groupes de moules, lors du processus de retournement, s'effectue à la main.

4. Procédé selon la revendication 2, caractérisé en ce que le basculement des groupes de moules, lors du processus de retournement, s'effectue de façon mécanisée.

5. Procédé selon l'une des revendications 1 à 4, caractérisé en ce qu'après avoir effectué le nombre nécessaire de processus de retournement, les groupes de moules sont vidés automatiquement et leur contenu étant transporté à l'écart.

6. Presse à égoutter pour la fabrication de fromage, à laquelle est associé un dispositif de transport (21, 22, 23) destiné à amener de la pâte dans des moules (9) de la presse à égoutter (20) et présentant une tête de pressage (4) destinée à comprimer la pâte dans les moules (9), caractérisée par une pluralité de groupes de moules (8) composés chacun d'une série de moules individuels (9) s'étendant dans la direction de la largeur de la presse à égoutter (1) et assemblés de façon rigide; un dispositif de répartition (20), déplaçable dans la direction longitudinale de la presse à égoutter, destiné à opérer le remplissage, par groupes, de la pâte dans les moules individuels (9) et faisant partie du dispositif de transport, et un mécanisme de retournement (30) pour les groupes de moules (8), également déplaçable le long de la presse à égoutter.

7. Presse à égoutter selon la revendication 6, caractérisée en ce que les groupes de moules (8) sont formés de moules individuels (9) interchangeables ayant une configuration identique, de préférence ayant une section transversale circulaire ou polygonale.

8. Presse à égoutter selon la revendication 6 ou 7, caractérisée en ce que les groupes de moules (8) sont prévus avec des moules individuels (9) interchangeables de configuration circulaire et les groupes de moules (8) à moules individuels (9) interchangeables ayant une configuration de section transversale polygonale adaptée à la presse à égoutter (1).

9. Presse à égoutter selon l'une des revendications 6 à 8, caractérisée en ce que la paroi des moules individuels (9) est fabriquée à partir d'une tôle perforée et en ce qu'appartient à chaque moule individuel (9) également une plaque de recouvrement (10) et une plaque de fond (11), composée du même matériau, la plaque de recouvrement (10) et la plaque de fond (11) étant reliés à la paroi de moule respective au moyen d'éléments de liaison déformables élastiquement dans la direction du pressage.

10. Presse à égoutter selon l'une des revendications 6 à 9, caractérisée par chaque fois deux appendices (13) de préférence cylindriques, sur les deux surfaces d'extrémité (12) des groupes de moules (8).

11. Presse à égoutter selon l'une des revendications 6 à 10, caractérisée en ce que le dispositif de répartition (20) présente un tube de répartition (21) disposé horizontalement, avec des appareils doseurs (22) montés dessus, pour la pâte, un chariot (7) portant le tube distributeur (21) et déplaçable le long de la presse à égoutter (1) et une tube d'amenée (23) mobile, se raccordant au tube de répartition (21) est relié à une pompe de transfert par l'intermédiaire d'un tuyau élastique.

12. Presse à égoutter selon la revendication 11, caractérisée en ce que les appareils doseurs (22) pour la pâte sont montés sur le tube de répartition (21), avec une sortie orientée verticalement vers le bas et leur nombre correspondant à celui des moules individuels (9) de chaque groupes de moules (8).

13. Presse à égoutter selon la revendication 11 ou 12, caractérisée en ce que le chariot (7) est réalisé portique, auquel est suspendu le tube de répartition 21, et relié de telle façon au tube d'amenée (23) que les deux tubes (21, 23) sont susceptible de pivoter horizontalement l'un par rapport à l'autre.

14. Presse à égoutter selon l'une des revendications 1 à 13, caractérisée en ce que le chariot en portique (7) est guidé, lors de son mouvement de déplacement mécanisé, sur des rails (6) prévus le long des deux côtés longitudinaux de la presse à égoutter (1).

15. Presse à égoutter selon l'une des revendications 6 à 14, caractérisée en ce que le mécanisme de retournement (30) est composé essentiellement de deux bras préhenseurs (31) chacun pourvus d'un crochet (12) à son extrémité libre, articulés chacun à l'un des deux montants (14) du chariot en portique (7) du dispositif de distribution (20), de telle façon qu'ils soient susceptible de s'écarter par pivotement de leur position de repos verticale et d'y revenir par pivotement pour saisir chaque fois l'un des appendices (13) réalisés sur les surfaces d'extrémité (12) des groupes de moules (8) et pour soulever, respectivement abaisser ces derniers, au moyen de leurs vérins d'actionnement disposés également sur les ailes de portique (14).

16. Presse à égoutter selon la revendications 15, caractérisée en ce que le mécanisme de retournement (30) présente au lieu des crochets (32) des bras préhenseurs un dispositif de basculement (33) avec une crémaillère (34), une roue dentée (35) s'engrenant avec elle, avec un moyeu creux (36) et un vérin d'actionnement (37) associé.

17. Presse à égoutter selon la revendications 16, caractérisée en ce que les faces d'extrémité (12) des groupes de moules (8) sont chacune pourvues d'un seul appendice (13) disposé centralement, dont le contour est configuré pour s'adapter avec ajustement de forme au contour intérieur du moyeu creux (36).

18. Presse à égoutter selon la revendications 16 ou 17, caractérisée en ce que le mécanisme de retournement (30) est disposé sur un chariot de transport spécifique.

19. Presse à égoutter selon l'une des revendications 6 à 14, caractérisée en ce qu'une cuve (2) pour les groupes de moules (8) et la tête de pressage (4) est montée à rotation, de telle façon, sur la presse à égoutter (1), que la cuve (2) avec les groupes de moules (8) et la tête de pressage (4) sont mobiles à rotation autour d'un axe commun, après chaque processus de pressage, lorsqu'ils sont encore à l'état comprimé, à l'aide d'un entraînement, ceci étant accompagné de la suppression du mécanisme de retournement (30) déplaçable.

20. Agencement de moules à paroi perforée destiné à recevoir une masse de fromage lors de l'égouttement de liquide par pressage, caractérisé en ce que plusieurs moules individuels (9) sont groupés, reliés de façon rigide, pour former un groupe de moules (8) pouvant être manipulé d'un tout.

21. Agencement de moules selon la revendication 20, caractérisé en ce que le groupe de moules individuels (8) est d'une largeur correspondant à peu près à la largeur globale d'une presse à égoutter (1) destinée à la fabrication de fromage. ou à la largeur d'une cuve (2) d'une presse à égoutter (1) destinée à la fabrication du fromage.
